# EUROPEAN PATENT SPECIFICATION

(11) **EP 2 679 319 B1**
(45) Date of publication and mention of the grant of the patent: **23.07.2014**
(21) Application number: 13003248.5
(22) Date of filing: 26.06.2013
(51) Int. Cl.: B21D 9/03

(54) **Bending core**
Biegedorn
Mandrin à cintrer

(30) Priority: 28.06.2012 IT MI20121137
(43) Date of publication of application: 01.01.2014
(73) Proprietor: CRIPPA S.P.A., 22060 Arosio (CO) (IT)
(72) Inventor: Orsi Carlo, 22060 Arosio (IT)
(74) Representative: Nemni, Raffaelo

(56) References cited:
- EP-A1- 1 488 867
- JP-A- 2005 205 483
- JP-A- 2009 172 661
- US-A- 4 635 464

## Description

### OBJECT OF THE INVENTION

The present invention concerns a bending core to bend filiform materials like pipes according to the preamble of claim 1. Said core comprises two or more component parts put in series to each other. Said component parts feature a shape suitable for engaging the complete portion of the inner area of the surface of the pipe being bent to prevent the formation of folds in the inner portion of the pipe being bent, thus preventing the material being deformed from folding instead of following a curvilinear pattern.

### PRIOR ART

A typical method to bend a pipe consists of using a bending core to prevent and reduce folds in the inner portion of the bent pipe. Ideally, the bending core should have such a shape as to constantly adhere to the inner wall of the pipe being bent, so as to prevent the formation of folds in such inner wall during the mentioned bending step.

The shapes of the bending core known are numerous. Concerning the bending core that is the object of the present patent application, bending cores formed of several component parts connected in series to each other are to be considered as known. However, a drawback of said known bending cores consists in that they always leave an empty space between one component part and the other, as one might notice by examining the figures of the Japanese patent applications JP 2005205483 A and JP 2009172661 as well as the document EP 1 488 867, on which the preamble of claim 1 is based. It describes and shows a mandrel for bending a simple construction and sufficient rigidity like a pipe comprising a plurality of plugs. Each plug is provided with a spherical outer peripheral surface.

### DISCLOSURE OF THE INVENTION

The bending core that is the subject of the present patent application is defined in claim 1 and it advantageously solves the problems of the known technique by providing a bending core to bend filiform materials, for instance a pipe, comprising two or more component parts connected in series to each other. Each of said component parts comprises an outer portion having a spheroidal shape suitable for engaging the complete area between the inner wall of the pipe being bent as well as the outer surface of the portion of the component part that precedes it. Such a positioning is possible for all component parts present along the bending line of the pipe, because said component parts have a spheroidal shape with at least one longitudinal section of at least one external profile having a plane curvilinear shape. According to a first embodiment, the external profile of each component part that makes up the subject bending core and having a plane curvilinear shape comprises at least one first convex curve and preferably at least one second concave curve. According to a second embodiment, the shape of each component part making up the mentioned core differs from the embodiment described above in the external profile of the component part. It comprises at least one portion having the shape like the tangent function of said external profile whose plane curvilinear profile, referred to as tangent function here below, is suitable for connecting said first convex curve and said second concave curve continuously.

It is evident that the mentioned tangent function could be reduced down to describe just an inflexion point between the two curves, which would mean, in this case, to go back to said first embodiment described above. Each component part of the subject bending core is connected to another component part by means of a multidirectional hooking device comprising a sphere coupled with an elastic mechanical member having the shape of a saddle, suitable for hooking the sphere of the other component part it hooks to.

### DESCRIPTION OF THE FIGURES

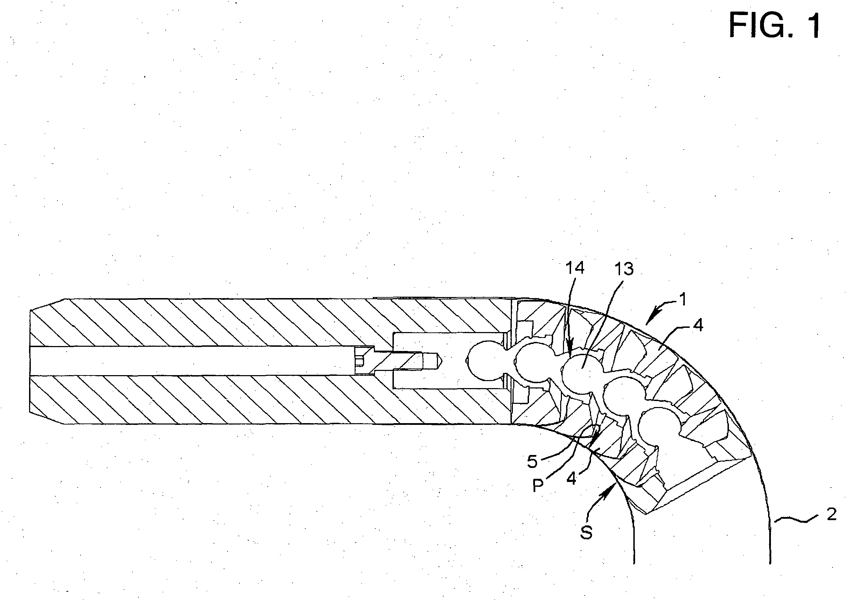

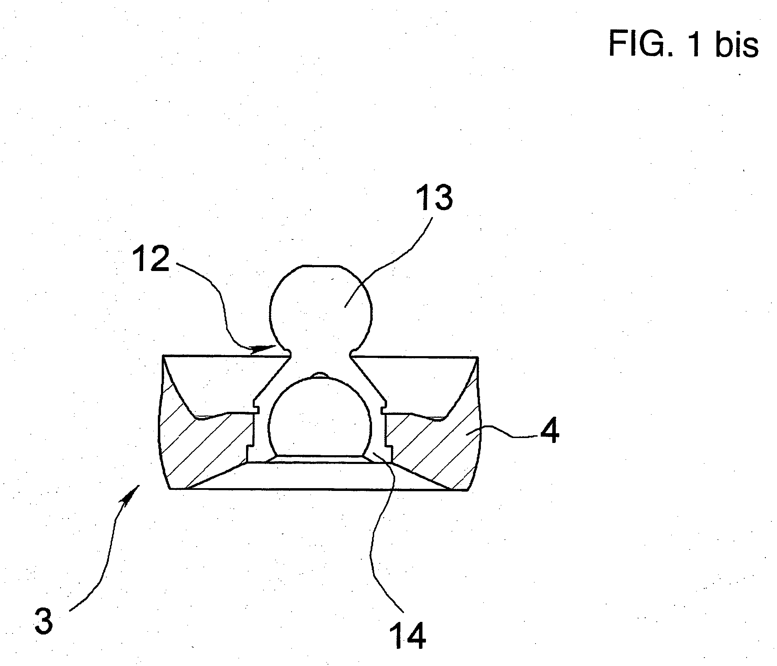

Figure 1 shows a longitudinal section view of the subject bending core assembly.
Figure 1 bis shows a longitudinal section view of a single component part that, joined to others identical thereto, makes up the subject bending core.
Figure 2 shows a longitudinal section view of the external profile of the first embodiment of the component part that, joined to others identical thereto, makes up the subject bending core.
Figure 3 shows a longitudinal section view of the external profile of the second embodiment of the component part that, joined to others identical thereto, makes up the subject bending core.

Figure 1 shows a longitudinal section view of the bending core assembly (1) to bend filiform materials, for instance a pipe (2), comprising two or more component parts (3) connected in series to each other. Each of said component parts (3) comprises an external portion (4) having a spheroidal shape suitable for engaging the complete area between the inner wall (P) of the pipe (2) being bent. The outer surface (5) of the portion (4) of the component part (3) is suitable for overlapping the corresponding surface (5) of the portion (4) of another component part (3) that precedes it along the bending line (S). Said portion (4) is suitable for engaging the complete area between the inner wall (P) of the pipe (2) being bent because it features a spheroidal shape, at least one longitudinal section (6) of at least one external profile (7) having a plane curvilinear shape (8).

Figure 1 also shows the element used to interconnect the individual component parts (3). Each of said component parts (3) is connected to another component part (3) by means of a multidirectional hooking device (12), not shown in this figure, comprising a sphere (13), coupled with an elastic mechanical member (14) having the shape of a saddle suitable for hooking the sphere (13) of said other component part (3).

Figure 1 bis shows a longitudinal section view of a single component part (3) that, joined to others identical thereto, makes up the subject bending core. Said component part (3) comprises an external portion (4) having a spheroidal shape. This portion (4), as shown in figure 1, is suitable for engaging the complete area between the inner wall (P) of the pipe (2) being bent. Said component part (3) also comprises a multidirectional hooking device (12) which comprises a sphere (13) coupled with an elastic mechanical member (14) having the shape of a saddle. This elastic mechanical member (14) is suitable for hooking the sphere (13) of another component part (3) that follows it so that, by joining several component parts (3) together in this manner, the bending core (1) is formed.

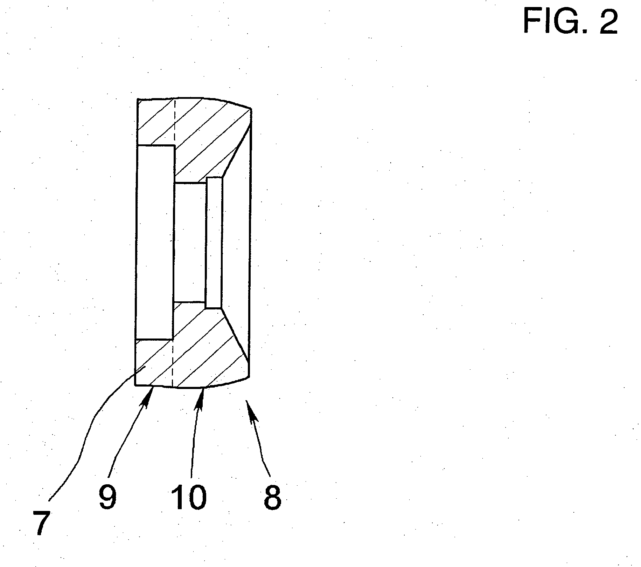

Figure 2 shows a longitudinal section view of the external profile of the first embodiment of the component part that, joined to others identical thereto, makes up the subject bending core. Said external profile (7) having a plane curvilinear shape (8) features a first convex curve (9) and a second concave curve (10).

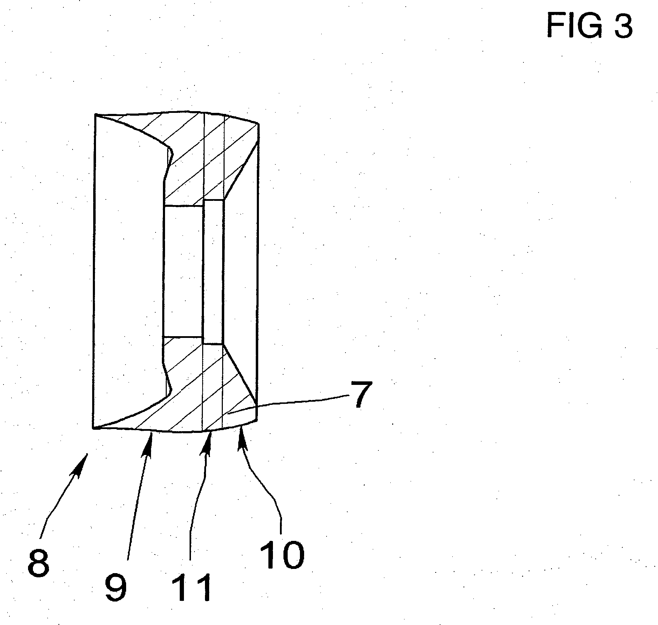

Figure 3 shows a longitudinal section view of the external profile of the second embodiment of the component part that, joined to others identical thereto, makes up the subject bending core. Said external profile (7) having a plane curvilinear shape (8) comprises at least one tangent function (11) suitable for connecting said first convex curve (9) and said second concave curve (10) continuously. Said tangent function (11) is represented in figure 3, by way of an example, by a segment.

## Claims

1. A bending core (1) to bend filiform materials, for instance a pipe (2), comprising two or more component parts (3) connected in series and each of said component parts (3) with an external portion (4) having a spheroidal shape, **characterized in that** each of said component parts (3) is suitable for engaging the complete area between the inner wall (P) of the pipe (2) being bent and the outer surface (5) of the portion (4) of the component part (3) that precedes another component part (3) along the bending line (S) said spheroidal portion (4) having at least one longitudinal section (6) of at least one external profile (7) having a plane curvilinear shape (8).

2. A bending core (1) to bend filiform materials, for instance a pipe (2), according to the claim 1, **characterized in that** said external profile (7) having a plane curvilinear shape (8) features at least one first convex curve (9).

3. A bending core (1) to bend filiform materials, for instance a pipe (2), according to the claim 2, **characterized in that** said external profile (7) having a plane curvilinear shape (8) features at least one second concave curve (10).

4. A bending core (1) to bend filiform materials, for instance a pipe (2), according to the claim 3, **characterized in that** said external profile (7) having a plane curvilinear shape (8) features at least one tangent function (11) suitable for connecting said first convex curve (9) and said second concave curve (10) continuously.

5. A bending core (1) to bend filiform materials, for instance a pipe (2), according to any of the previous claims, **characterized in that** each component part (3) is connected to another component part (3) by means of a multidirectional hooking device (12) comprising a sphere (13) coupled with an elastic mechanical member (14) having the shape of a saddle suitable for hooking the sphere (13) of said other component part (3).

## Patentansprüche

1. Ein Biegekern (1) zum Biegen von langgezogenen Materialien, beispielsweise einem Rohr (2), der zwei oder mehr hintereinander angeordnete Bestandteile (3) umfasst und jedes der besagten Bestandteile (3) mit einem äußeren ellipsoiden Teil (4), dahingehend gekennzeichnet, dass jedes der besagten Bestandteile (3) dazu geeignet ist, den ganzen Bereich zwischen Innenwand (P) des zu biegenden Rohrs (2) und äußerer Oberfläche (5) des Teils (4) des Bestandteils (3), der einem weiteren Bestandteil (3) entlang der gekrümmten Linie (S), ellipsoider Teil gennant, vorhergeht, der mindestens einen Längsschnitt (6) von mindestens einem äußeren Profil (7) mit einer flachen, gekrümmten Form (8) aufweist.

2. Ein Biegekern (1) zum Biegen von langgezogenen Materialien, beispielsweise einem Rohr (2), entsprechend Anforderung 1, dahingehend gekennzeichnet, dass besagtes äußeres Profil (7) mit einer flachen, gekrümmten Form (8) mindestens eine erste konvexe Krümmung (9) aufweist.

3. Ein Biegekern (1) zum Biegen von langgezogenen Materialien, beispielsweise einem Rohr (2), entsprechend Anforderung 2, dahingehend gekennzeichnet, dass besagtes äußeres Profil (7) mit einer flachen, gekrümmten Form (8) mindestens eine zweite konkave Krümmung (10) aufweist.

4. Ein Biegekern (1) zum Biegen von langgezogenen Materialien, beispielsweise einem Rohr (2), entsprechend der Anforderung 3, dahingehend gekennzeichnet, dass besagtes äußeres Profil (7) mit einer flachen, gekrümmten Form (8) mindestens eine Tangensfunktion (11) aufweist, die dazu geeignet ist, besagte erste konvexe Krümmung (9) und besagte zweite konkave Krümmung (10) kontinuierlich miteinander zu verbinden.

5. Ein Biegekern (1) zum Biegen von langgezogenen Materialien, beispielsweise einem Rohr (2), entsprechend jeder beliebigen der oben genannten Anforderungen, dahingehend gekennzeichnet, dass jedes Bestandteil (3) mit einem weiteren Bestandteil (3) mittels einer mehrfach ausrichtbaren Verhakungs-Vorrichtung (12) verbunden ist, die eine Kugel (13) umfasst, gekoppelt mit einem elastischen mechanischen Glied (14), das die Form eines Sattels hat, dazu geeignet, die Kugel (13) besagten weiteren Bestandteils (3) einzuhängen.

## Revendications

1. Un mandrin de cintrage (1) pour le pliage de matériaux filiformes, par exemple un tube (2), comprenant deux ou plus de deux composants (3) reliées en séries, et chacun desdits composants (3) doté d'une portion extérieure (4) ayant une forme sphéroïdale, **caractérisé par le fait que** chacune desdits composants (3) est adapté pour engager la surface totale comprise entre la paroi intérieure (P) du tube (2) lorsqu'il est courbé et la surface extérieure (5) de la portion (4) du composant (3) qui précède un autre composant (3) le long de la ligne de pliage (S) dite portion sphéroïdale (4) ayant au moins une section longitudinale (6) d'au moins un profil extérieur (7) ayant une forme curviligne plane (8).

2. Un mandrin de cintrage (1) pour le pliage de matériaux filiformes, par exemple un tube (2), conformément à la demande 1, **caractérisé par le fait que** ledit profil extérieur (7) ayant une forme curviligne plane (8) présente au moins une première courbe convexe (9).

3. Un mandrin de cintrage (1) pour le pliage de matériaux filiformes, par exemple un tube (2), **caractérisé par le fait que** ledit profil extérieur (7) ayant une forme curviligne plane (8) présente au moins une deuxième courbe concave (10).

4. Un mandrin de cintrage (1) pour le pliage de matériaux filiformes, par exemple un tube (2), conformément à la revendication 3, **caractérisé par le fait que** ledit profil extérieur (7) ayant une forme curviligne plane (8) présente au moins une fonction tangente (11) adéquate pour relier ladite première courbe convexe (9) et ladite seconde courbe concave (10) de façon continue.

5. Un mandrin de cintrage (1) pour le pliage de matériaux filiformes, par exemple un tube (2), conformément à n'importe laquelle des revendications qui précèdent, **caractérisé par le fait que** chacun des composants (3) est relié à un autre composant (3) au moyen d'un dispositif d'accrochage multidirectionnel (12) comprenant une sphère (13) couplée avec un élément élastique mécanique (14) ayant la forme d'une selle appropriée pour l'accrochage de la sphère (13) de ladite autre partie constitutive (3).
